# EUROPÄISCHE PATENTANMELDUNG

(11) **EP 1 674 831 A1**
(43) Veröffentlichungstag der Anmeldung: **28.06.2006**
(21) Anmeldenummer: 04030548.4
(22) Anmeldetag: 23.12.2004
(51) Int. Cl.: G01D 5/245

(54) **Verfahren zur Übermittlung von Winkelinformationen und Anordnung zur Durchführung des Verfahrens**

(71) Anmelder: Carl Freudenberg KG, 69469 Weinheim (DE)
(72) Erfinder: Mutterer, Heinz, 76532 Baden-Baden (DE); Klebes, Tobias, 64668 Zotzenbach (DE); Kokoszynski, Wojciech, 67063 Ludwigshafen (DE)

(57) **Zusammenfassung**

Ein Verfahren zur Übermittlung von Winkelinformationen durch eine rotierende Einrichtung, wobei mindestens eine Abfolge von Signalen erfasst wird, wobei die einzelnen Signale miteinander verglichen werden und wobei sich mindestens ein Signal von den anderen Signalen unterscheidet, ist im Hinblick auf die Aufgabe, stets eine exakte und unmittelbare Erfassung von Betriebsparametern zu gewährleisten, dadurch gekennzeichnet, dass zwei Abfolgen von Signalen erfasst und miteinander verglichen werden, wobei durch eine erste Abfolge Signale regelmäßig und durch eine zweite unregelmäßig geliefert werden. Eine Anordnung umfasst eine rotierende Einrichtung, welcher umfänglich signalgebende Elemente zugeordnet sind, wobei die Elemente bei der Rotation der Einrichtung zwei Abfolgen von Signalen liefern, und mindestens einen Detektor, welcher die Signale erfasst, um aus den Signalen jeweils unterschiedliche Betriebsparameter zu ermitteln.

## Beschreibung

### Technisches Gebiet

Die Erfindung betrifft ein Verfahren zur Übermittlung von Winkelinformationen durch eine rotierende Einrichtung, wobei mindestens eine Abfolge von Signalen erfasst wird, wobei die einzelnen Signale miteinander verglichen werden und wobei sich mindestens ein Signal von den anderen Signalen unterscheidet. Die Erfindung betrifft des Weiteren eine Anordnung, umfassend eine rotierende Einrichtung und mindestens einen Detektor.

### Stand der Technik

Derartige Verfahren sind aus dem Stand der Technik bereits bekannt. Üblicherweise werden solche Verfahren zur Erfassung von Drehzahlen und Winkeln in Kraftfahrzeugen verwendet. Insbesondere werden Betriebsparameter einer Kurbelwelle oder Nockenwelle erfasst. Zur Durchführung dieser Verfahren werden Geberräder verwendet, welche sowohl als Zahnräder als auch als Multipolencoder mit magnetisiertem Elastomer ausgestaltet sein können.

Üblicherweise weisen Geberräder, welche als Multipolencoder ausgestaltet sind, abwechselnd über ihren Umfang Nord- und Südpole auf. Die von diesen Polen erzeugten Felder werden mit entsprechenden Detektoren oder Sensoren erfasst, digitalisiert und als Signale ausgegeben. Üblicherweise umfasst ein solcher Multipolencoder 58 Polpaare, deren gleichnamige bzw. gleichgerichtete Pole in Intervallen von 6° einander abfolgend am Umfang eines Geberrades positioniert sind. Dabei umfasst ein Polpaar ein Kreisbogenintervall von 6°. An einer Stelle des Umfangs entsteht durch Weglassen von zwei Polpaaren eine Lücke, um einen Referenzpunkt zu definieren. Ein solcher Referenzpunkt korrespondiert häufig mit dem oberen Totpunkt eines Zylinders.

Diese gewollte Lücke führt jedoch zu Problemen. Die in der Lücke fehlenden Signale zur Bestimmung von Zeiten müssen bei der Erfassung der Drehzahl und Winkelinformationen aus vorangegangenen Signaldaten errechnet werden. Hierzu sind Motorsteuerungsgeräte notwendig, welche durch komplexe Software über Näherungsmethoden die fehlenden Signale ermitteln. Diese Vorgehensweise ist jedoch nicht ausreichend exakt und beinhaltet Fehler, welche durch dynamische Vorgänge beim Beschleunigen und Bremsen noch verstärkt werden.

### Darstellung der Erfindung

Der Erfindung liegt daher die Aufgabe zu Grunde, ein Verfahren der eingangs genannten Art derart auszugestalten und weiter zu bilden, dass stets eine exakte und unmittelbare Erfassung von Betriebsparametern gewährleistet ist.

Erfindungsgemäß wird die voran stehende Aufgabe hinsichtlich eines Verfahrens zur Übermittlung von Informationen mit den Merkmalen des Patentanspruchs 1 gelöst. Danach ist ein Verfahren dadurch gekennzeichnet, dass zwei Abfolgen von Signalen erfasst und miteinander verglichen werden, wobei durch eine erste Abfolge Signale regelmäßig und durch eine zweite unregelmäßig geliefert werden.

Erfindungsgemäß ist zunächst erkannt worden, dass eine erste Abfolge gleichmäßige Referenzsignale liefern kann, durch welche erste Betriebsparameter erfassbar sind. In einem zweiten Schritt ist sodann erkannt worden, dass eine zweite Abfolge, welche unregelmäßig Signale liefert, weitere Betriebsparameter von den ersten Betriebsparametern entkoppelt darstellen kann. Insoweit ist sicher gestellt, dass unterschiedliche Betriebszustände unabhängig von einander erfasst oder übermittelt werden können. Insoweit wird durch die erfindungsgemäße Ausgestaltung des Verfahrens vermieden, dass aus einem Datensatz auf unterschiedliche Betriebsparameter geschlossen werden muss. Hierdurch ist es möglich, stets eine exakte und unmittelbare Erfassung von Betriebsparametern sicher zu stellen.

Folglich ist mit dem erfindungsgemäßen Verfahren die eingangs genannte Aufgabe gelöst.

Die erste Abfolge könnte nach jeweils konstanten Intervallen gleiche Absolutsignale liefern. Diese konkrete Ausgestaltung erlaubt problemlos, beispielsweise die Absolutposition einer Kurbel- oder Nockenwelle zu erfassen, in dem nämlich allein die Signale digital erfasst und gezählt werden. Der Winkel und die Geschwindigkeit lassen sich dann aus den bekannten Intervallen und der Zählzeit ermitteln. Insoweit ist eine aufwändige und nur bedingt genaue Software, welche aus den Signalen Absolutpositionen ermittelt, nicht notwendig.

Durch die zweite Abfolge könnten nach vorzugsweise konstanten Intervallen gleiche Signale geliefert werden, wobei die Intervalle mindestens ein unregelmäßiges Intervall umfassen. Ganz konkret ist hierbei denkbar, dass nach einer Abfolge konstanter Intervalle ein Intervall auftritt, welches sich von den konstanten Intervallen in seiner Ausdehnung unterscheidet. Diese konkrete Ausgestaltung erlaubt es, das unregelmäßige Intervall einem charakteristischen Betriebszustand oder Arbeitspunkt einer Einrichtung zuzuordnen. Durch Auswahl der Ausdehnung des Intervalls ist die Auflösung nahezu beliebig fein einstellbar, soweit die Auflösung des Erfassungsdetektors dies zulässt.

Die zweite Abfolge könnte mindestens zwei unregelmäßige, voneinander verschiedene und einander unmittelbar folgende Intervalle umfassen, welchen konstante Intervalle folgen und voran gehen. Diese konkrete Ausgestaltung ist von Vorteil, wenn die Erfassung eines charakteristischen Punktes durch eine signifikante und besonders sicher erfassbare Unregelmäßigkeit sichergestellt werden soll. Die Vorkehrung zweier verschiedener und einander abfolgender Intervalle, welche sich von konstanten Intervallen unterscheiden, verhindert wirkungsvoll, dass diese von einem Detektor nicht erkannt werden.

Durch die zweite Abfolge könnte nach mindestens einem Intervall ein in Bezug auf die Signalamplitude oder Signalintensität unregelmäßiges Signal geliefert werden. Dabei ist denkbar, dass die Signalstärke oder Signalhöhe sich von den anderen Signalen dieser Abfolge unterscheidet. Insoweit ist durch unterschiedliche Signalintensitäten eine Übertragung von Information möglich. Diese Erfassung erlaubt die Verwendung von Sensor- oder DetektorEinrichtungen, welche erst ab einem gewissen Schwellwert Signale wahrnehmen.

Die unregelmäßigen Intervalle könnten in ihrer Ausdehnung von den konstanten Intervallen der ersten Abfolge oder den regelmäßigen der zweiten Abfolge abweichen. Die Abweichung sollte derart ausgeprägt gewählt sein, dass die unregelmäßigen Intervalle von den verwendeten Detektoren sicher erkannt werden. Wenn besonders hoch auflösende Sensoren oder Detektoren verwendet werden, können sich die unregelmäßigen Intervalle in ihrer Ausdehnung nur ganz geringfügig von den regelmäßigen Intervallen unterscheiden.

Als Signal gebende Elemente könnten magnetische Pole verwendet werden. Denkbar ist auch mechanische Mittel wie Zähne zu verwenden. Die Vorkehrung magnetischer Pole stellt eine problemlose Erfassung durch kommerziell erhältliche Detektoren sicher. Des Weiteren stellt die Verwendung magnetischer Pole sicher, dass stets ein Nord- und ein Südpol einander abfolgen. Insoweit ist eine Abfolge binärer Signale im Sinne einer 0-1-Signalfolge problemlos erzielbar.

Durch die Ausdehnung der magnetischen Pole könnte die Ausdehnung der unregelmäßigen Intervalle eingestellt werden. Beispielsweise ist denkbar, dass ein überdimensionierter Nord- oder Südpol aufgrund seiner Ausdehnung die Felder der ihm gleichgerichteten gleichmäßig dimensionierten Pole derart stört, dass eine Feldasymmetrie auftritt. Diese Asymmetrie könnte ein Maß für das Verhältnis der Ausdehnungen zweier einander abfolgender Intervalle darstellen und durch Detektoren erfassbar sein. Insoweit ist allein durch Magnetisierung geometrisch definierter Bereiche eine Intervalleinstellung realisierbar.

Die Signale der ersten Abfolge könnten durch Änderungen der Richtung und Intensität des Magnetfeldes erzeugt werden. Ganz konkret könnten durch jeden Übergang von einem Nordpol zu einem Südpol oder von einem Südpol zu einem Norpol Signale erzeugt werden. Hierdurch ist sichergestellt, dass bei einer konstanten geometrischen Ausdehnung der Polpaare die Signale der ersten Abfolge in konstanten Intervallen erzeugbar sind. Die Signale der zweiten Abfolge könnten hierbei durch Übergänge von Südpol zu Nordpol bzw. Nordpol zu Südpol geliefert werden. Durch die Ausdehnung der Pole ist eine Abstimmung der Länge der Intervalle, nach denen ein Signal der zweiten Abfolge erzeugt wird, problemlos einstellbar.

Die Signale könnten durch mindestens einen Hall-Sensor erfasst werden. Hall-Sensoren sind kommerziell leicht erhältlich und stellen ausgereifte und zuverlässig arbeitende Detektoren dar. Vor diesem Hintergrund ist denkbar, Differenzen-Hall-Sensoren, MR-(magneto-resistive)-Sensoren, GMR-(Giant magneto resistive)-Sensoren, induktive Sensoren oder weitere geeignete Sensoren zu verwenden.

Die magnetischen Elemente könnten auf dem Umfang einer rotierenden Einrichtung angeordnet werden. Dabei ist denkbar, Polpaare in konstanten Winkelabständen umfänglich anzuordnen. Beispielsweise ist denkbar, 60 Polpaare in Intervallen von 6° einander abfolgend anzuordnen. Um eine höhere Auflösung zu erzielen, ist es auch denkbar, eine höhere Anzahl von Polpaaren in kleineren Winkelabständen einander abfolgend umfänglich anzuordnen. Vor diesem Hintergrund könnten die Pole auf einem Geberrad positioniert sein, welches Positionen oder Betriebsparameter einer Kurbelwelle oder anderer rotierender Maschinenelemente ansteuert oder erfasst. Dabei könnte das Geberrad auf dem rotierenden Maschinenelement positioniert sein.

Die Einrichtung könnte hierbei als Encoderscheibe oder Geberscheibe verwendet werden. Diese Verwendung ist besonders vorteilhaft, da die Signale der Übergänge von Nord- zu Südpolen oder Süd- zu Nordpolen benachbarter Polpaare bei bekannter Winkelbeabstandung lediglich über einen gewissen Zeitraum gezählt werden müssen, um sodann den Winkel oder die Umdrehungszahl zu ermitteln. Die Signale der ersten Abfolge könnten zur Bestimmung einer Winkelposition und die Signale der zweiten Abfolge zur Synchronisierung eines rotierenden Elements verwendet werden. Dabei ist denkbar, dass das rotierende Element als Kurbelwelle oder Nockenwelle eines Kraftfahrzeugs ausgestaltet ist. Diese konkrete Ausgestaltung erlaubt problemlos, einerseits die Winkelposition einer Kurbelwelle oder Nockenwelle und andererseits die Position beispielsweise des oberen Totpunkts eines Zylinders unabhängig von der Winkelposition zu erfassen oder anzusteuern. Die Erfassung des oberen Totpunkts kann mit sehr hoher Auflösung erzielt werden, wenn eine besonders große Anzahl von signalgebenden Elementen verwendet wird, da deren Winkelbeabstandung sehr klein gewählt werden kann. Vor diesem Hintergrund könnten die Signale der zweiten Abfolge zur Erfassung eines Verdrehungswinkels eines rotierenden Elements verwendet werden.

Das Verfahren könnte signalgebende Elemente verwenden, welche elektrische Signale oder elektrische Impulse aussenden. Darüber hinaus ist denkbar, dass optische Signale oder akustische Signale eingesetzt werden. Ganz in Abhängigkeit von den gewählten Detektoren und der gewünschten Ansprechzeit der Detektoren können elektrische, optische oder akustische Signale verwendet werden. Beispielsweise ist denkbar, optische Signale zu verwenden, wenn eine besonders kurze Ansprechzeit realisiert werden soll. Akustische Signale, insbesondere Ultraschallsignale, könnten verwendet werden, wenn sich die rotierenden Teile in einem Raum befinden, welcher durch Gase oder Fluide getrübt ist und insoweit eine optische Detektierung nicht möglich ist.

Die Signale könnten mechanisch erzeugt werden. Dabei ist denkbar, dass ein Zahnrad mit unregelmäßiger Zahnung verwendet wird. Diese Ausgestaltung zeichnet sich durch eine besondere Robustheit und geringe Störanfälligkeit aus.

Des Weiteren ist die eingangs genannte Aufgabe im Hinblick auf eine Anordnung mit den Merkmalen des Patentanspruchs 21 gelöst. Danach umfasst eine Anordnung eine rotierende Einrichtung, welcher umfänglich signalgebende Elemente zugeordnet sind, wobei die Elemente bei der Rotation der Einrichtung zwei Abfolgen von Signalen liefern, und mindestens einen Detektor, welcher die Signale erfasst, um aus den Signalen jeweils unterschiedliche Betriebsparameter zu ermitteln. Um Wiederholungen in Bezug auf die erfinderische Tätigkeit sowie weitere Ausgestaltungen zu vermeiden, sei an dieser Stelle auf die Ausführungen zum Verfahren als solchem verwiesen.

Es gibt nun verschiedene Möglichkeiten, die Lehre der vorliegenden Erfindung auf vorteilhafte Weise auszugestalten und weiter zu bilden. Dazu ist einerseits auf die den Patentansprüchen 1 und 21 nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugen Ausführungsbeispiele der Erfindung anhand der Zeichnung werden auch im Allgemeinen bevorzugte Ausgestaltungen und Weiterbildung der Lehre erläutert.

### Kurzbeschreibung der Zeichnung

In der Zeichnung zeigen
- Fig. 1: eine Abfolge von ersten und zweiten Signalen, bei welchen ein längeres Intervall zwischen zwei kürzeren Intervallen eingeschlossen ist,
- Fig. 2: eine Abfolge von zweiten Signalen, bei welchen ein kürzeres Intervall zwischen zwei längeren eingeschlossen ist,
- Fig. 3: eine Reihenschaltung einer Signalabfolge gemäß Fig. 2 und
- Fig. 4: eine Abfolge von zweiten Signalen zur Quadrantenbestimmung auf einem rotierenden Element.

### Ausführung der Erfindung

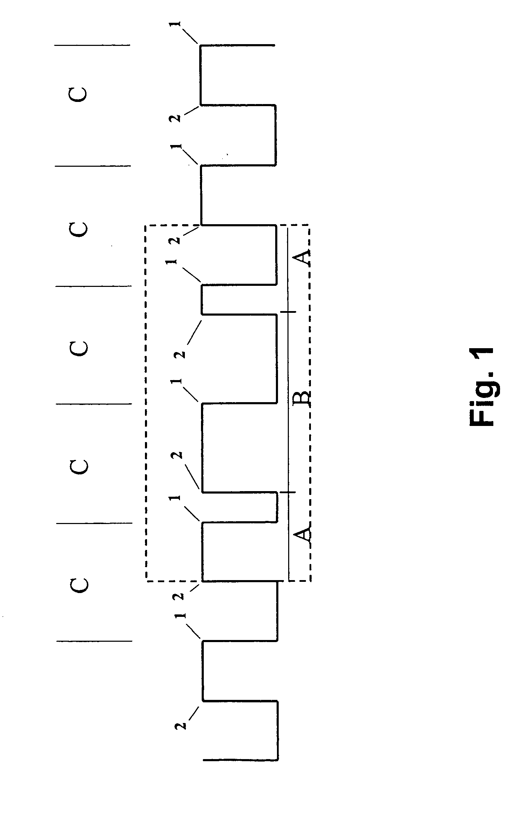

Fig. 1 zeigt eine schematische Darstellung zweier Abfolgen von Signalen. Dabei sind die Signale einer ersten Abfolge mit 1 und die Signale einer zweiten Abfolge mit 2 gekennzeichnet. Die Signale 1 sind als fallende Flanken, die Signale 2 als steigende Flanken ausgestaltet. Fig. 1 zeigt, dass der Winkelabstand von einem ersten Signal zu einem weiteren ersten Signal, d.h. von fallender Flanke zu fallender Flanke stets konstant ist. Dieses konstante Intervall (C) beträgt 6°. In einem regelmäßigen Bereich der zweiten Abfolge beträgt auch ein Intervall 6°, welches zwischen zwei Signalen 2 liegt.

In einem unregelmäßigen Bereich der zweiten Abfolge ändern sich die Intervalle zwischen zwei Signalen 2, wobei die Intervalle zwischen zwei Signalen 1 konstant bleiben.

Durch diese Unregelmäßigkeit in der Abfolge der Signale 2 ist es möglich, Informationen zu übertragen, welche von den mit der ersten Abfolge übertragenen unabhängig sind.

Fig. 1 zeigt konkret eine Abfolge, bei dem ein im Vergleich zu den regelmäßigen Intervallen zu langes Intervall B zwischen zwei zu kurzen Intervallen A eingeschlossen ist. Dabei ist das zu lange Intervall B zwischen zwei Signalen 2 doppelt so lang wie eines der jeweils kürzeren Intervalle A.

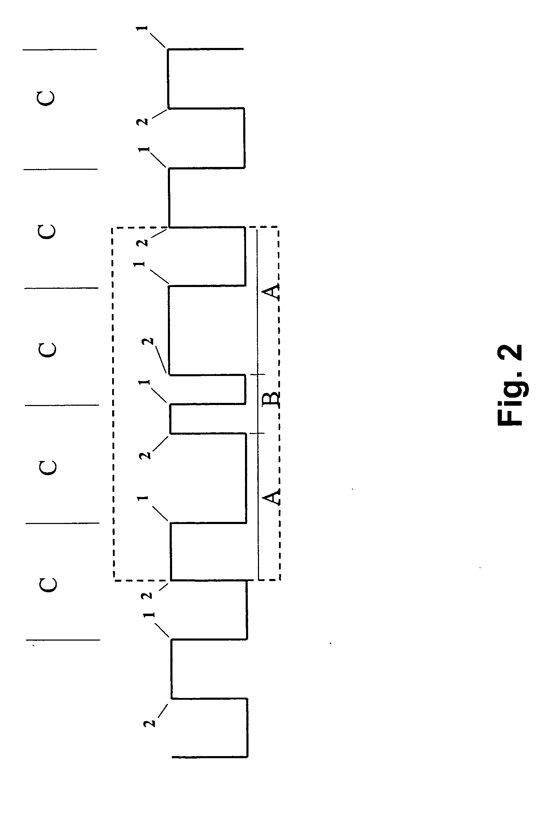

Fig. 2 zeigt eine Abfolge, bei der ein relativ zu den regelmäßigen Intervallen zu kurzes Intervall B zwischen zwei zu langen Intervallen A eingeschlossen ist.

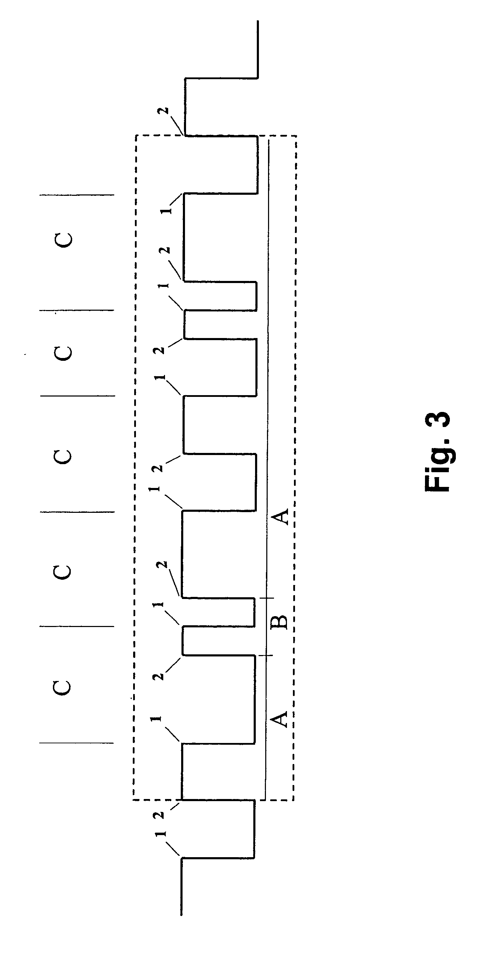

Fig. 3 zeigt eine Intervallfolge gemäß Fig. 2, wobei die Intervallfolge gemäß Fig. 2 hintereinander geschaltet ist. Realisiert ist eine Abfolge lang, kurz, lang, lang, kurz, lang. Denkbar ist hierbei, dass die Intervallfolgen sowohl unmittelbar aufeinander oder durch beliebig viele regelmäßige Intervallfolgen getrennt angeordnet werden.

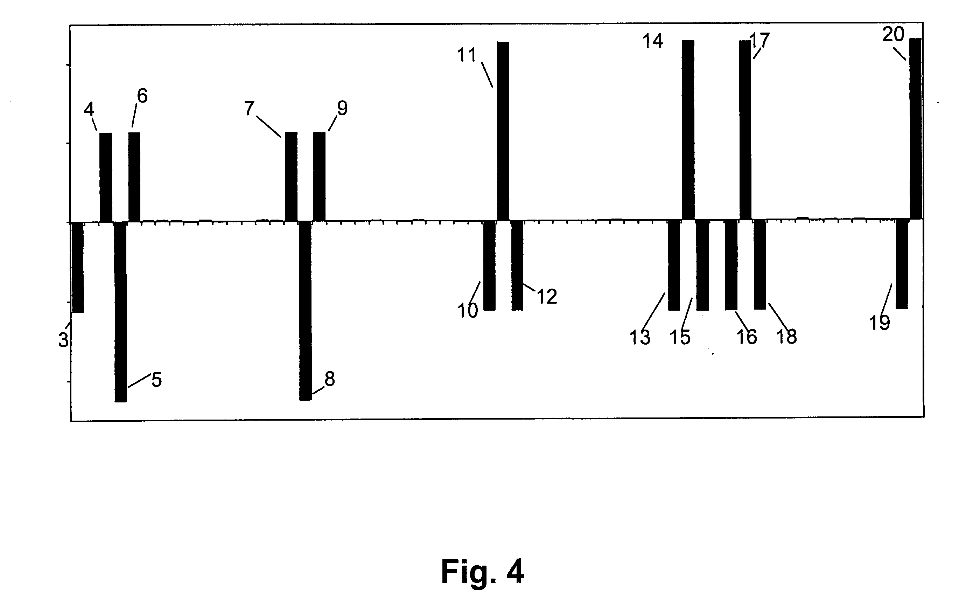

Fig. 4 zeigt eine Abfolge von Signalen 2, welche sich periodisch wiederholen. Diese können zur Quadrantenbestimmung verwendet werden. Diese Information ist durch ein Geberrad darstellbar, wobei die einzelnen unregelmäßigen Abfolgen der Signale 2 Referenzpunkte auf dem drehenden Geberrad repräsentieren. Fig. 4 zeigt ganz konkret, dass einem etwas zu kurzen Intervall 3 ein etwas zu langes Intervall 4 und diesem ein viel kürzeres Intervall 5 folgt, an welches sich wiederum ein etwas zu langes Intervall 6 anschließt. Nach einer Abfolge regelmäßiger Intervalle tritt ein Intervall 7 auf, welches wiederum etwas zu lang ist, wobei das Intervall 8 kürzer und das Intervall 9 etwas zu lang ist. Die Intervalle 10, 11 und 12 sind ähnlich ausgestaltet. An diese Intervalle schließt sich eine Abfolge konstanter Intervalle an. Dieser folgt die Abfolge der Intervalle 13, 14, 15, 16, 17 und 18. Hieran schließt sich erneut eine Abfolge konstanter Intervalle an. Dieser folgt die Abfolge der Intervalle 19, 20 und 3. Als signalgebende Elemente werden auf einem Geberrad magnetische Pole unterschiedlicher Ausdehnung verwendet. Die Ausdehnung dieser charakteristischen Pole relativ zu den Polen regelmäßiger Ausdehnung repräsentiert die Ausdehnung der Intervalle 3 bis 20.

In den voran gegangenen Figuren 1 bis 4 stellt ein deutlich verlängertes Intervall, wie beispielsweise das Intervall B gemäß Fig. 1 einen deutlich zu stark ausgedehnten magnetischen Pol dar. Gemäß Fig. 4 wäre ein solches Intervall durch ein Intervall 11, 14 oder 17 gekennzeichnet. Die Intervalle 10, 12, 13, 15, 16 und 18 entsprechend dabei Intervallen A gemäß Fig. 1, welche magnetische Pole repräsentieren, die in ihrer Ausdehnung etwas zu gering ausgebildet sind. Sehr gering ausgedehnte Pole werden durch die sehr kurzen Intervalle 5 und 8 aus Fig. 4 dargestellt. Ein deutlich längeres Intervall ist dabei doppelt so lang wie die ihm zugeordneten etwas verkürzten. Ein deutlich kürzeres Intervall ist halb so lang wie die ihm zugeordneten verlängerten. Die Ausdehnung der hierzu korrespondierenden Pole ist entsprechend ausgestaltet.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervor gehoben, dass die zuvor rein willkürlich gewählten Ausführungsbeispiele lediglich zur Erörterung der erfindungsgemäßen Lehre dienen, diese jedoch nicht auf diese einschränken.

## Patentansprüche

1. Verfahren zur Übermittlung von Winkelinformationen durch eine rotierende Einrichtung, wobei mindestens eine Abfolge von Signalen erfasst wird, wobei die einzelnen Signale miteinander verglichen werden und wobei sich mindestens ein Signal von den anderen Signalen unterscheidet,
**dadurch gekennzeichnet, dass** zwei Abfolgen von Signalen erfasst und miteinander verglichen werden, wobei durch eine erste Abfolge Signale regelmäßig und durch eine zweite unregelmäßig geliefert werden.

2. Verfahren nach Anspruch 1, **dadurch gekennzeichnet, dass** durch die erste Abfolge nach jeweils konstanten Intervallen gleiche Signale geliefert werden.

3. Verfahren nach Anspruch 2, **dadurch gekennzeichnet, dass** durch die zweite Abfolge nach Intervallen gleiche Signale geliefert werden, wobei diese Intervalle mindestens ein unregelmäßiges Intervall umfassen.

4. Verfahren nach Anspruch 3, **dadurch gekennzeichnet, dass** die zweite Abfolge mindestens zwei unregelmäßige, voneinander verschiedene und einander folgende Intervalle umfasst, welchen konstante Intervalle folgen und vorangehen.

5. Verfahren nach einem der Ansprüche 1 bis 4, **dadurch gekennzeichnet, dass** durch die zweite Abfolge nach mindestens einem Intervall ein unregelmäßiges Signal geliefert wird.

6. Verfahren nach einem der Ansprüche 1 bis 5, **dadurch gekennzeichnet, dass** als signalgebende Elemente magnetische Pole verwendet werden.

7. Verfahren nach Anspruch 6, **dadurch gekennzeichnet, dass** durch die Ausdehnung der magnetischen Pole die Ausdehnung der Intervalle eingestellt wird.

8. Verfahren nach Anspruch 6 oder 7, **dadurch gekennzeichnet, dass** die Signale der ersten Abfolge durch Änderungen der Richtung und Intensität der Magnetfelder der Pole erzeugt werden.

9. Verfahren nach einem der Ansprüche 6 bis 8, **dadurch gekennzeichnet, dass** die Signale der ersten Abfolge Übergänge von Nordpol zu Südpol oder Südpol zu Nordpol und die Signale der zweiten Abfolge durch Übergänge von Südpol zu Nordpol bzw. Nordpol zu Südpol geliefert werden.

10. Verfahren nach einem der Ansprüche 6 bis 9, **dadurch gekennzeichnet, dass** die Signale durch mindestens einen Hallsensor, Differenzen-Hall-Sensor, MR-(magneto-resistiven)-Sensor, GMR-(Giant magneto-resistiven)-Sensor oder einen induktiven Sensor erfasst werden.

11. Verfahren nach einem der Ansprüche 6 bis 10, **dadurch gekennzeichnet, dass** die magnetischen Elemente auf dem Umfang der rotierenden Einrichtung angeordnet werden.

12. Verfahren nach einem der Ansprüche 1 bis 11, **dadurch gekennzeichnet, dass** die Einrichtung als Encoderscheibe oder Geberscheibe ausgestaltet ist.

13. Verfahren nach Anspruch 11 oder 12, **dadurch gekennzeichnet, dass** die Signale der ersten Abfolge zur Bestimmung der Umdrehungszahl oder Absolutposition und die Signale der zweiten Abfolge zur Synchronisierung eines rotierenden Elements verwendet werden.

14. Verfahren nach einem der Ansprüche 11 bis 13, **dadurch gekennzeichnet, dass** die Signale der zweiten Abfolge zur Erfassung eines Verdrehungswinkels verwendet werden.

15. Verfahren nach einem der Ansprüche 1 bis 5 oder 12 bis 14, **dadurch gekennzeichnet, dass** die Signale elektrisch erzeugt werden.

16. Verfahren nach einem der Ansprüche 1 bis 5 oder 12 bis 14, **dadurch gekennzeichnet, dass** die Signale optisch erzeugt werden.

17. Verfahren nach einem der Ansprüche 1 bis 5 oder 12 bis 14, **dadurch gekennzeichnet, dass** die Signale akustisch erzeugt werden.

18. Verfahren nach einem der Ansprüche 1 bis 5 oder 12 bis 14, **dadurch gekennzeichnet, dass** die Signale mechanisch erzeugt werden.

19. Verfahren nach Anspruch 18, **dadurch gekennzeichnet, dass** ein Zahnrad mit unregelmäßiger Zahnung verwendet wird.

20. Verfahren nach einem der Ansprüche 1 bis 19, **dadurch gekennzeichnet, dass** in einem Kraftfahrzeug ein Geberrad als Signalgeber und ein Detektor mit nachgeschalteter Auswerteeinrichtung als Signalempfänger verwendet wird.

21. Anordnung zur Durchführung eines Verfahrens nach einem der Ansprüche 1 bis 20, umfassend eine rotierende Einrichtung, welcher umfänglich signalgebende Elemente zugeordnet sind, wobei die Elemente bei der Rotation der Einrichtung zwei Abfolgen von Signalen liefern, und mindestens einen Detektor, welcher die Signale erfasst, um aus den Signalen jeweils unterschiedliche Betriebsparameter zu ermitteln.

22. Anordnung nach Anspruch 21, soweit dieser auf die Ansprüche 1 bis 14 rückbezogen ist, **dadurch gekennzeichnet, dass** die Einrichtung als Geberad ausgestaltet ist, welches umfänglich magnetische Polpaare aufweist, wobei einzelne Pole sich von den übrigen Polen in ihrer Ausdehnung unterscheiden.

23. Anordnung nach Anspruch 22, **dadurch gekennzeichnet, dass** 60 Polpaare umfänglich angeordnet sind.

24. Anordnung nach Anspruch 22 oder 23, **dadurch gekennzeichnet, dass** in mehreren Quadranten des Geberrades unregelmäßig ausgedehnte Pole angeordnet sind.
